# EUROPEAN PATENT APPLICATION

(11) **EP 3 783 627 A1**
(43) Date of publication of application: **24.02.2021**
(21) Application number: 19788246.7
(22) Date of filing: 16.04.2019
(51) Int. Cl.: H01B 7/08, H02G 3/30

(54) **IMPROVED FLAT RIBBON CONDUCTOR CABLE**

(30) Priority: 17.04.2018 ES 201830549 U
(71) Applicant: Representacions Jerg, S.L., 08201 Sabadell (ES)
(72) Inventor: FLORES MOLLEVI, Rosa Maria, 08201 SABADELL (ES)
(74) Representative: Isern Patentes y Marcas S.L.
(86) International application number: PCT/ES2019/070262
(87) International publication number: WO 2019/202191

(57) **Abstract**

The invention relates to an improved flat ribbon conductor cable comprising an electric conducting track or a plurality of conducting tracks that are substantially flat and which run parallel to one another, the tracks being contained in an electrically insulating flexible film of electrically insulating polymer material, wherein one of the faces of the film includes a layer of adhesive material. The polymer material is a polyimide.

## Description

### OBJECT OF THE INVENTION

The object of the present application is the registration of an improved flat ribbon conductor cable.

More specifically, the invention proposes the development of a flat ribbon conductor cable for low voltage, envisaged to be a part of a conventional electrical installation, comprising an electric conducting track or a plurality of conducting tracks, provided with adhesive means in order to be quickly and easily fastened on the surface of a wall.

### BACKGROUND OF THE INVENTION

Currently, when an expansion or extension of an electrical installation needs to be performed in an indoor area, for example, inside a home or premises, there are mainly two possibilities for carrying it out. One of them consists of making a groove or channel on the surface of a wall wherein the electrical cable will be placed, such that it is necessary to use mechanical and/or electrical tools, further generating an amount of debris from the formation of the groove, for which reason it is cumbersome and requires considerable time for the execution thereof as well as cleaning of the area.

The second possibility consists of mounting conduits on a vertical wall or surface which are able to be fastened with the help of fastening means, such as flanges and screw elements. Although it is a solution that may be simpler than the previous one since it is not necessary to perform construction work, visually it may be a less attractive solution.

Furthermore, the applicant is currently unaware of an invention that has all the features described in this specification.

### DESCRIPTION OF THE INVENTION

The present invention has been developed with the aim of providing a flat ribbon conductor cable, which is configured as a novelty within the field of application and solves the previously mentioned drawbacks, also providing other additional advantages that will be obvious from the description below.

It is therefore an object of the present invention to provide an improved flat ribbon conductor cable, for low voltage, comprising an electric conducting track or a plurality of conducting tracks that are substantially flat and which run parallel to one another, the tracks being contained in an electrically insulating flexible film of electrically insulating polymer material, wherein one of the faces of the film includes a layer of adhesive material, and is characterised in that the polymer material is a polyimide.

Polyimide belongs to the family of polyamides, specifically aromatic polyamides. The properties thereof are essentially due to its structure of aromatic rings and amide bonds, which form a rigid chain. These chains interact with each other by means of hydrogen bonds forming highly directed structures. For this reason, they generate a polymer with high packing.

It should be mentioned that polyimide (PI) is a material that stands out for having a high resistance to heat and chemical agents.

Thanks to these features, the creation of an electrical installation is facilitated with respect to the systems usually used since it is not necessary to make any type of channel or groove in a wall or the placement of conduits with the corresponding fastenings thereof. In this manner, the time necessary to prepare and perform the electrical installation is significantly reduced, preventing the inconveniences that construction implies, for example, on a wall, in other words, generation of annoying noise, dirt, formation of debris, etc.

With the proposed invention, it is enough for the user to hook the flat ribbon cable on the wall without needing to perform any project tasks. The user can subsequently apply a layer of putty on the cable film and subsequently paint over the applied putty.

According to another aspect of the invention, it comprises a removable protective band which is able to be adhered to the layer of adhesive material, which can be removed when the cable must be adhered to the wall.

Advantageously, the film has a thickness comprised in a range between 0.17-0.25 mm, more preferably 0.20 mm.

Other features and advantages of the flat ribbon conductor cable object of the present invention will become apparent from the description of a preferred, but not exclusive, embodiment, which is illustrated by way of non-limiting example in the accompanying drawings, wherein:

### BRIEF DESCRIPTION OF THE DRAWINGS

Figure 1 is an elevation view of an embodiment of a conductor cable according to the present invention; and
Figure 2 is a cross-sectional view of the conductor cable of the invention.

### DESCRIPTION OF A PREFERRED EMBODIMENT

In light of the aforementioned figures and, according to the numbering adopted, a preferred exemplary embodiment of the invention can be seen in them, which comprises the parts and elements indicated and described in detail below.

As seen, the flat ribbon conductor cable comprises a body with variable length and a thickness of approximately 0.20 mm which has a plurality of conducting tracks (1) that are substantially flat made of copper material which run parallel and spaced apart from each other, axially along the entire length of the body, the conducting tracks (1) being housed in an electrically insulating flexible film (2) made of polyimide (PI), one of the faces of the film (2) including a layer of adhesive material (3). The conducting tracks can have the same width or a different width from each other, as represented in the present embodiment.

In order to carry out the electrical connections, the ends of the conducting tracks (1) can be coupled by means of specific connectors (not shown) to the current supply source and to the point to be powered with electrical current.

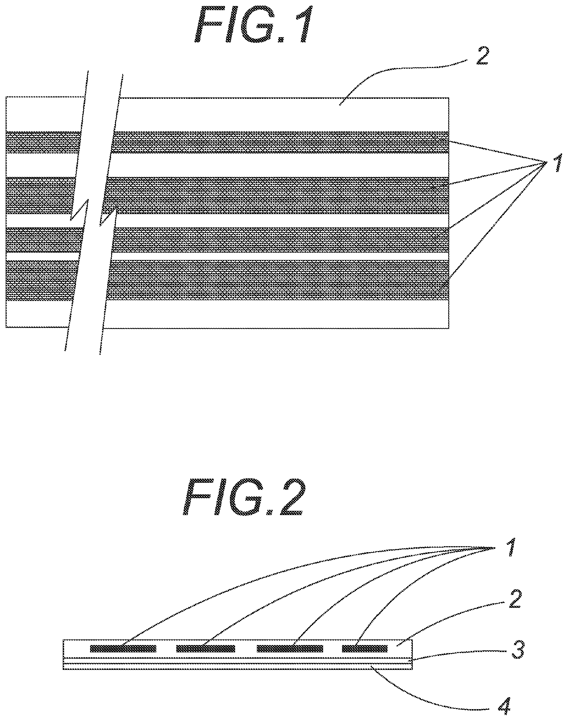

Additionally, and as seen in figure 2, a protective band (4) is provided which is able to be adhered to the layer of adhesive material which is easily removable, such that before the cable is placed on the wall, the adhesive layer (3) is protected by the protective band against dirt, dust or other external agents that could damage or harm the properties of the adhesive layer.

It should be mentioned that the dimensions represented in figure 2 are only representative and have been made in order to facilitate the compression of the different parts that make up the ribbon conductor cable.

It should be mentioned that after placing the described ribbon conductor cable, a putty product or similar product (used to be applied on wall surfaces) can be painted on the external face of the film (2) or a combination of both, in other words, first applying a layer of putty or similar and then (after the layer of putty has dried) applying a coat of paint. In this manner, the location of the cable is not easily seen and is perfectly hidden, which improves the visual appearance of a wall.

The details, shapes, dimensions and other accessory elements, used to manufacture the flat ribbon cable of the invention, may be suitably substituted for others which do not depart from the scope defined by the claims which are included below.

## Claims

1. An improved flat ribbon conductor cable comprising an electric conducting track or a plurality of conducting tracks that are substantially flat and which run parallel to one another, the tracks being contained in an electrically insulating flexible film of electrically insulating polymer material, wherein one of the faces of the film includes a layer of adhesive material, **characterised in that** the polymer material is a polyimide.

2. The improved flat ribbon conductor cable according to claim 1, **characterised in that** it comprises a removable protective band which is able to be adhered to the layer of adhesive material.

3. The improved flat ribbon conductor cable according to claim 1, **characterised in that** the film has a thickness comprised in a range of 0.17-0.25 mm, more preferably 0.20 mm.
